Europäisches Patentamt

European Patent Office

Office européen des brevets

(11) Veröffentlichungsnummer: **0 601 032 B1**

(12) **EUROPÄISCHE PATENTSCHRIFT**

(45) Veröffentlichungstag der Patentschrift: **10.05.95**

(21) Anmeldenummer: **92918537.9**

(22) Anmeldetag: **04.09.92**

(86) Internationale Anmeldenummer:
**PCT/EP92/02049**

(87) Internationale Veröffentlichungsnummer:
**WO 93/04921 (18.03.93 93/08)**

(51) Int. Cl.⁶: **B64G 1/26**, G05D 1/08

(54) **VORRICHTUNG UND VERFAHREN ZUR LAGEREGELUNG EINES UM EINE KÖRPERFESTE ACHSE IN ROTATION ZU VERSETZENDEN RAUMFAHRZEUGES.**

(30) Priorität: **06.09.91 DE 4129627**

(43) Veröffentlichungstag der Anmeldung:
**15.06.94 Patentblatt 94/24**

(45) Bekanntmachung des Hinweises auf die Patenterteilung:
**10.05.95 Patentblatt 95/19**

(84) Benannte Vertragsstaaten:
**FR GB IT**

(56) Entgegenhaltungen:
**WO-A-87/05411**
**WO-A-89/02622**
**WO-A-92/03339**
**US-A- 4 725 024**

(73) Patentinhaber: **Daimler-Benz Aerospace Aktiengesellschaft**

**D-81663 München (DE)**

(72) Erfinder: **SURAUER, Michael**
**Lindenstrasse 11**
**D-8224 Chieming (DE)**
Erfinder: **BITTNER, Helmut**
**Zirlerstrasse 4**
**D-8000 München 70 (DE)**

**Beschreibung**

Die Erfindung betrifft eine Vorrichtung zur Lageregelung eines um eine körperfeste Achse (Drehachse) in Rotation zu versetzenden Raumfahrzeuges gemäß dem Oberbegriff des Patentanspruchs 1 sowie ein dazugehöriges Verfahren gemäß dem Oberbegriff des Patentanspruchs 4,

Eine derartige Vorrichtung und ein derartiges Verfahren sind aus der US-PS 4 725 024 bekennt. Dort geht es darum, einen dreiachsenstabilisierten Satelliten, der sich auf einer niedrigen, nahezu kreisförmigen Umlaufbahn befindet, durch Zünden eines Perigäumstriebwerks in eine elliptische Transferbahn zu befördern, deren Apogäum mit dem Radius der angestrebten geostationären Umlaufbahn Obereinstimmt. Vor da Zünden des Perigäumsmotors muß der Satellit aus Stabilitatsgründen um eine körperfeste Drehachse in Rotation versetzt werden, welche mit dem Schubvektor des vom Perigäumstriebwerk ausgeübten Schubs übereinstimmen soll. Dabei ist das Perigäumstriebwerk noch am Satelliten angedockt, und die Triebwerks-Symmetrieachse ist mit einer Symmetrieachse des Satelliten, im Falle der US-PS 4 725 024 der Rollachse, deckungsgleich. Die Rollachse ist bekanntlich eine der drei körperfesten, ein rechtwinkliges Koordinatensystem bildenden Satellitenachsen, zu denen noch die Gier- sowie die Nickachse als Querachsen gehören. Im endgültigen Betriebszustand des Satelliten auf der geostationären Umlaufbahn soll die Rollachse in Flugrichtung, die Gierachse auf den Erdmittelpunkt hin und die Nickachse senkrecht zu beiden sowie zur Bahnebene orientiert sein.

Zum Lageregelungssystem eines dreiachsenstabilisierten Satelliten gehören eine Reihe von Stellgliedern, beispielsweise Treibstoffdüsen, welche in gezielter Weise Dreh- bzw. Stellmomente um die drei genannten Achsen zu liefern in der Lage sind. Die bekannte Lageregelungsvorrichtung gemäß der US-PS 4 725 024 weist ferner Sensoren in Form von Kreiseln auf, welche Winkelgeschwindigkeltssignale bezüglich Drehungen um die drei körperfesten Achsen liefern. Jedes der beiden Querachsen-Winkelgeschwindigkeitssignale wird in ein Regiernetzwerk eingespeist, welches ein Ansteuersignal für einen eine Totzone aufweisenden Modulator liefert, der wiederum die Aufgabe hat, diskrete Stellsignale für die der jeweiligen Querachse Zugeordneten Stellglieder abzugeben. Die beiden Reglernetzwerke weisen einen ersten sowie einen zweiten, dem ersten parallelgeschalteten, einen Integrator enthaltenden Signalzweig auf, wobei beide Signalzweige vor dem Zugeordneten Modulator in einem Summationsglied zusammengeführt sind.

Vor dem Aussetzen aus dem Raumtransporter wird der Satellit mit dem angedockten Perigäumstriebwerk bereits in eine langsame Drehung von etwa zwei Umdrehungen pro Minute um die Drehachse versetzt. Nach dem Aussetzen des so gebildeten Raumfahrzeuges aus der Ladebucht des Raumtransporters wird durch Betätigung der entsprechenden Stellglieder die Rotation um die Drehachse kontinuierlich auf einen Wert von etwa vierzig Umdrehungen pro Minute erhöht. Während dieser Aufspinphase muß darauf geachtet werden, daß die unweigerlich auftretende Nutation möglichst auf eine konstante Amplitude geregelt und die Richtung der Drehachse im Inertialraum möglichst genau beibehalten wird.

Die Anregung von Nutationsschwingungen kann verschiedene Ursachen haben. So wird i.a. wegen nicht vollkommen symmetrischer Massenverteilung die Hauptträgheitsachse der Kombination Satellit/Perigäumstriebwerk nicht mit der ursprünglichen Drehachse zusammenfallen. Um diese Hauptträgheitsachse, welche die Achse mit dem kleinsten Trägheitsmoment darstellt, ist die Rotation zu stabilisieren Die die Rotation bewirkenden Stellglieder sind jedoch gegenuber der geometrischen Drehachse symmetrisch angeordnet, so daß schon hier Querachsenmomente auftreten. Noch höhere Querachsenmomente sind dadurch bedingt, daß der Schwerpunkt der Kombination Satellit/Perigäumstriebwerk gegenuber dem Schwerpunkt des Satelliten erheblich verschoben ist und die der Lageregelung dienenden Stellglieder in ihrer Anordnung am Satelliten sowie hinsichtlich der Wirkungsrichtung ihrer Stellmomente an eine Konstellation angepaßt sind, bei der der Satellit sich bereits vom Perigäumstriebwerk getrennt hat. Da jedoch die während der Aufspinphase zu bewirkende Rotation sowie die dann erforderliche Lageregelung ausschließlich mit den im Normalbetrieb sowieso vorhandenen Stellgliedern bewerkstelligt werden sollen, verursacht die geschilderte Schwerpunktsverlagerung bei Betätigung eines Stellgliedes erhebliche Störmomente um andere Achsen. Außerdem kann durch schwappenden Flüssigtreibstoff ein Aufklingen der Nutation verursacht werden.

Bei der Lageregelungsvorrichtung gemäß der US-PS 4 725 024 ist nun vorgesehen, nach etwa der Hälfte des Aufspinnvorganges die Totzonen der Modulatoren plötzlich aufzuweiten. Dies soll dazu dienen, größere Nutationsamplituden ohne Eingriff der Triebwerke zuzulassen. Da die destabilisierenden Einflüsse mit der Nutationsamplitude zunehmen, wäre jedoch eine Regelung der Nutation auf eine konstante Amplitude äußerst zweckmäßig. Dieses Ziel ist aber mit der bekannten Lageregelungsvorrichtung nicht zu erreichen, zumal die dortigen Reglernetzwerke in den beiden Signalzweigen jeweils mit konstanter Verstärkung arbeiten.

Weiterhin ist bei der bekannten Lageregelungsvorrichtung von Nachteil, daß der für die Messung der Winkelgeschwindigkeit um die Drehachse verwendete Kreisel bereits nach Kurzer Zeit in die Sättigung gerät, da er lediglich für die im Normalbetrieb auftretenden, relativ kleinen Winkelgeschwindigkeiten ausgelegt ist Damit geht die Winkellageinformation für alle drei Achsen bereits Kurz nach Beginn der Aufspinphase verloren, ebenso wie die Winkelgeschwindigkeitsinformation für die Drehachse. Es besteht die Gefahr eines unerwunschten Wegdriftens der Drehachse aus der nach Möglichkeit einzuhaltenden inertialen Orientierung. Schließlich enthalten die Querachsen-Winkelgeschwindigkeitssignale konstante Signalanteile, die zu unsymmetrischer Aussteuerung der Totzonen der Modulatoren und damit zur Auslösung einseitiger Stelleingriffe sowie zur Verstellung der Drehachse führen. Die konstanten Signalanteile sind dadurch bedingt, daß, wie bereits erwähnt das Raumfahrzeug um die Hauptträgheitsachse rotiert, die unvermeidliche Abweichungen von der geometrischen Achse aufweist, und die zur Messung der Winkelgeschwindigkeiten dienenden Kreisel auf die geometrischen Satellitenachsen ausgerichtet sind, so daß die Winkelgeschwindlgkeitssignale Anteile enthalten, die dem Produkt aus der Mißweisung zwischen der geometrischen und der Hauptträgheitsachse und der Winkelgeschwindigkeit um die Drehachse proportional sind.

Der Erfindung liegt daher die Aufgabe zugrunde, eine Vorrichtung der eingangs genannten Art anzugeben, die es in erster Linie ermöglicht, die Nutationsamplitude in zuverlässiger Weise auf einen konstanten Wert zu begrenzen. Diese Aufgabe wird gemäß der Erfindung durch die im kennzeichnenden Teil des Patentanspruchs 1 angegebenen Merkmale gelöst. Ein entsprechendes Verfahren ist da Patentanspruch 4 zu entnehmen. In den Ansprüchen 2 sowie 6 und 7 sind zusätzlich Maßnahmen angegeben, die es gestatten, die Drehachse so weitgehend wie möglich in der gewünschten inertialen Raumorientierung stabil zu halten.

Die Unteransprüche enthalten weitere vorteilhafte Ausbildungen der Erfindung.

Im folgenden werden Ausführungsformen der Erfindung anhand von Abbildungen näher erläutert. Es zeigen in schematischer Weise:

Fig. 1  einen Satelliten mit körperfestem, orthogonalem Achsensystem, als Stellglieder vorgesehenen Treibstoffdüsen sowie einem angedockten Perigäumstriebwerk,

Fig. 2  am Satelliten zur Winkelgeschwinaigkeitsmessung angeordnete Sonnensensoren und Kreisel,

Fig. 3  ein Blockschaltbild einer erfindungsgemäßen Lageregelungsvorrichtung,

Fig. 4  ein Blockschaltbild einer modifizierten erfindungsgemäßen Lageregelungsvorrichtung.

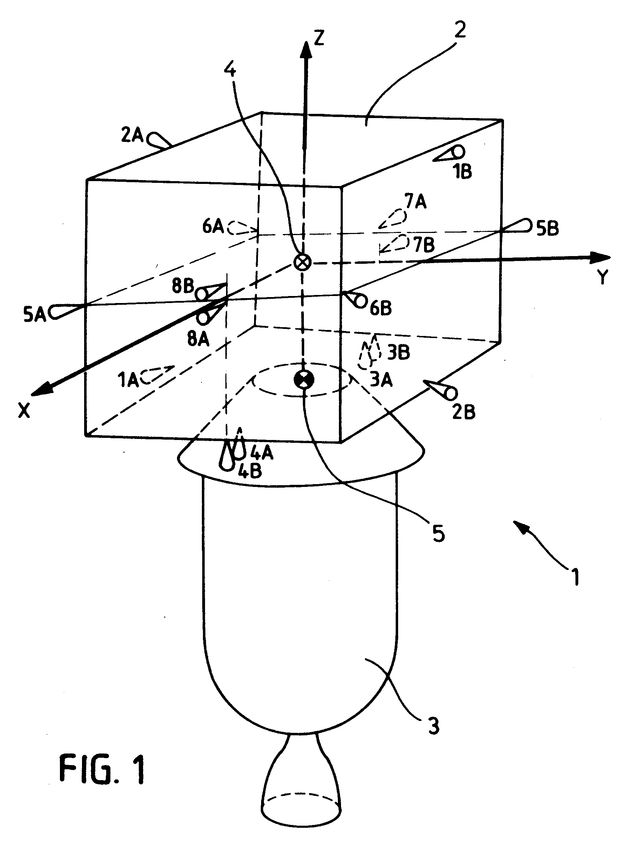

Fig. 1 zeigt ein Raumfahrzeug 1, welches aus einem dreiachsenstabilisierten Satelliten 2 sowie einem daran angedockten Perigäumstriebwerk 3 besteht. Dem Satelliten 2 ist ein körperfestes Koordinatensystem X, Y, Z zugeordnet, dessen Ursprung im Schwerpunkt 4 des Satelliten 2 liegt. Der Schwerpunktt 5 des gesamten Raumfahrzeuges 1 ist demgegenüber in Richtung der negativen Z-Achse verschoben. Die normalerweise als Gierachse des Satelliten 2 fungierende Z-Achse bildet in der dargestellten Konstellation die Symmetrieachse des gesamten Raumfahrzeuges 1 und gleichzeitig die Drehachse, um welche das Raumfahrzeug 1 vor Beginn des Perigäumsmanövers in Rotation zu versetzen ist. Diese Symmetrieachse fällt mit der Schubrichtung des Perigäumstriebwerks 3 zusammen. Im Normalbetrieb bilden die X-Achse die Rollachse und die Y-Achse die Nickachse des Satelliten 2.

Der Satellit 2 trägt eine Anzahl von als Stellglieder fungierenden Treibstoffdüsen, welche in ihrer Anordnung und Wirkungsrichtung an den Normal betrieb angepaßt sind. Die Wirkungsrichtungen der Düsenpaare 5A und 5B sowie 6A und 6B liegen in der XY-Ebene und sind gegenüber der Richtung der Y-Achse üblicherweise um einen Winkel geneigt, um zu verhindern, daß die austretenden Gase auf die in dieser Achsenrichtung angeordneten, in Fig. 1 nicht eigens gezeigten Solargeneratoren gerichtet sind. Sie liefern im Normalbetrieb Stellmomente um die positive Z-Achse (5A, 5B) sowie um die negative Z-Achse (6A, 6B), also Giermomente. In der dargestellten Konstellation kommen noch Stellmomente um die negative X-Achse (5A, 6A) sowie um die positive X-Achse (5B, 6B) hinzu. Die Wirkungsrichtungen der Düsenpaare 1A und 1B sowie 2A und 2B liegen in der YZ-Ebene und sind ebenfalls gegenüber der Richtung der Y-Achse um einen Winkel geneigt. Sie liefern im Normalbetrieb Stellmomente um die positive X-Achse (1A, 1B) sowie um die negative X-Achse (2A, 2B), d.h. also Rollmomente. In der dargestellten Konstellation sind vor allem die Düsen 1B und 2A wirksam, da ihre Wirkungsrichtungen relativ weit am Schwerpunkt 5 des Raumfahrzeuges vorbeilaufen, während die Wirkungsrichtungen der Düsen 1A und 2B nur in relativ kleinem Abstand am Schwerpunkt 5 vorbeilaufen. Die Düsen 1B sowie 2A erzeugen daher merkliche Stellmomente um die positive bzw. negative X-Achse. Die Düsenpaare 3A und 3B sowie 4A und 4B liegen mit ihrer Wirkungsrichtung in der XZ-Ebene und parallel zur positiven Z-Achse. Im Normalbetrieb resultieren daraus Stellmomente um die positive Y-Achse (3A, 3B) sowie die negative Y-Achse (4A, 4B), d.h. also Nickmomente. In der dargestellten Konstellation können diese Düsen auch Stellmomente um die Y-Achse erzeugen. Schließlich sind noch Düsenpaare 8A und 8B sowie 7A und 7B gezeigte, deren Wirkungsrichtungen in der XZ-Ebene liegen und parallel zur X-Achse orientiert sind. Im Normalbetrieb dienen diese Düsen vor allem der Bahnregelung, da sie Beschleunigungen in Richtung der positiven und negativen X-Achse, also Geschwindigkeitserhöhungen bzw. -verringerungen in Bahnrichtung bewirken können. In der dargestellten Konstellation resultieren bei Betätigung dieser Düsen Stellmomente um die negative bzw. positive Y-Achse.

Für den Aufspinvorgang vor Beginn des Perigäumsmanövers werden als Stellglieder 5A und/oder 5B oder 6A und/oder 6B verwendet. Diese liefern während der Aufspinphase kontinuierlich die erwünschten Stellmomente konstanter Größe um die Z-Achse erzeugen aber bei Verwendung nur eines der beiden redundanten Antriebssysteme (A oder B) gleichzeitig die bereits erwähnten hohen Störmomente um die Querachsen der gezeigten Konfiguration.

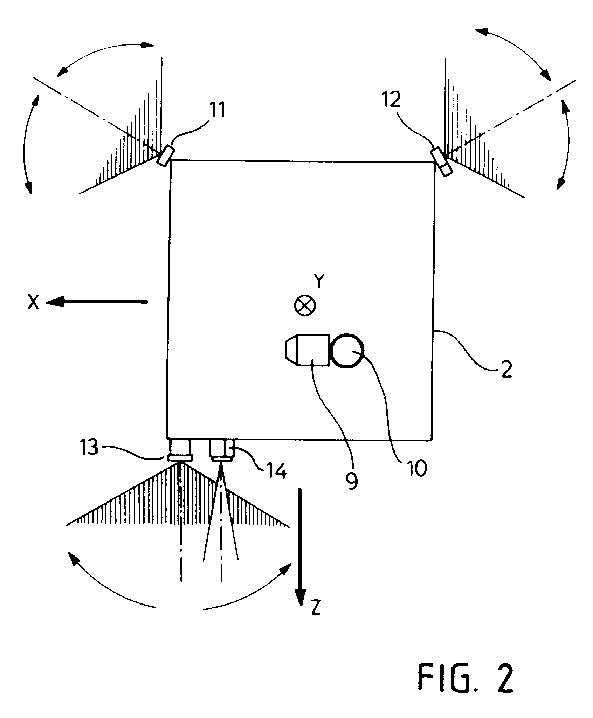

Fig. 2 zeigt lediglich den Satelliten 2 mit seinem körperfesten Achsensystem X, Y, Z sowie mit verschiedenen Sensoren, die der Bestimmung der Winkelgeschwindigkeiten um diese Achsen dienen. So sind zwei Kreisel 9 und 10 zur Bildung von Winkelgeschwindigkeitssignalen $\omega_X$ sowie $\omega_Y$ bezüglich Drehungen um die X bzw. Y-Achsen vorgesehen. Zur Bestimmung der Winkelgeschwindigkeit um die Z-Achse sind Sonnensensoren 11, 12 und 13 vorhanden, welche bezuglich ihrer optischen Achsen Gesichtsfelder von jeweils ± 60° in zwei senkrecht zueinander orientierten Ebenen, von denen eine die XZ-Ebene ist, aufweisen. In der XZ-Ebene wird damit das gesamte Gesichtsfeld von 360° unmittelbar abgedeckt. Senkrecht dazu wird zwar zunächst ein um die Richtung der Y-Achse zentrierter Doppelkegel mit einem Öffnungswinkel von jeweils 60° nicht erfaßt, jedoch gilt das nicht mehr, wenn der Satellit 2 bzw. das Raumfahrzeug 1 während des Aufspinvorganges um die Z-Achse rotiert. Dann wird die Sonne unabhängig von ihrer relativen Position in jedem Falle bei einem Umlauf einmal erfaßt. Mit Hilfe der Sonnensensoren 11, 12 und 13 gelingt es somit, Winkelgeschwindigkeitssignale $\omega_Z$ bezüglich der Drehung um die Z-Achse (Drehachse) bereitzustellen.

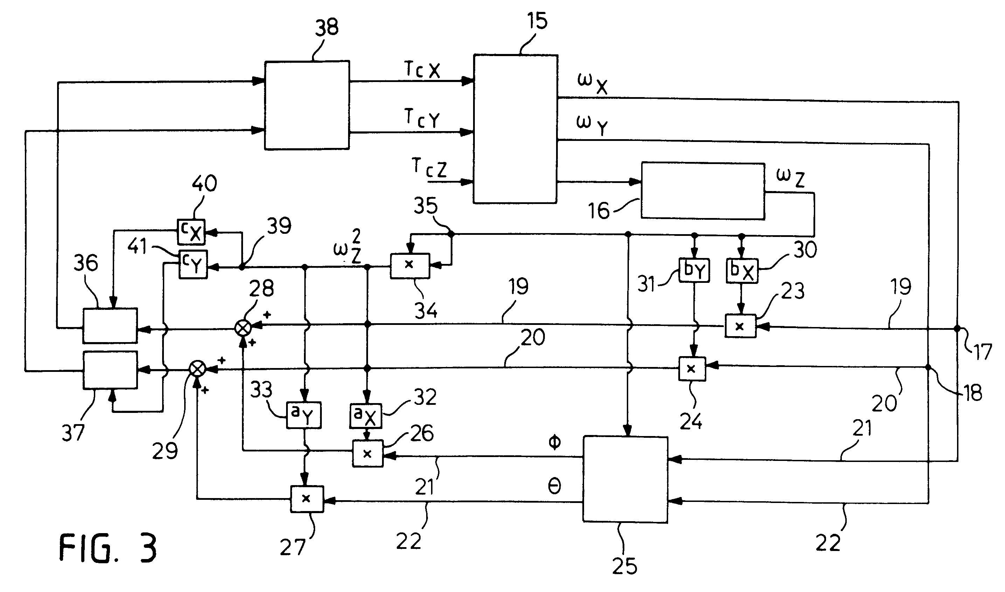

Fig. 3 zeigt ein Blockschaltbild einer Lageregelungsvorrichtung gemäß der Erfindung. Die Raumfahrzeugdynamik wird durch den Block 15 verkörpert. Durch entsprechende Messungen werden Querachsen-Winkelgeschwindigkeitssignale $\omega_X$ sowie $\omega_Y$ bezüglich Drehungen um die X- bzw. Y-Achsen gewonnen, ebenso wie ei, Drehachsen-Winkelgeschwindigkeitssignal $\omega_Z$ bezüglich der Drehung um die während der Aufspinphase als Rotationsachse fungierende Z-Achse In Abhängigkeit davon, auf welche Weise die Drehung um die Z-Achse messend verfolgt wird, ist unter Umständen eine Einrichtung 16 zur Schätzung der entsprechenden Winkelgeschwindigkeit erforderlich. Die Querachsen-Winkelgeschwindigkeitssignale $\omega_X$ und $\omega_Y$ gelangen zu Verzweigungspunkten 17 bzw. 18 und von dort in erste Signalzweige 19 bzw. 20 sowie zweite Signalzweige 21 bzw. 22. In den ersten Signalzweigen 19 und 20 gelangen die Querachsen-Geschwindigkeitssignale $\omega_X$ bzw. $\omega_Y$ zu Multiplikationsgliedern 23 bzw. 24, wo sie mit Faktoren multipliziert werden, welche proportional zum Drehachsen-Winkelgeschwindigkeitssignal $\omega_Z$ sind Dazu wird das Dreh-achsen-Winkelgeschwindigkeitssignal $\omega_Z$ in zwei parallele Verstärker 30 und 31 eingespeist, in denen spater noch naher zu beschreibende Proportionalitätskonstanten $b_X$ bzw. $b_Y$ aufgeschaltet werden. Die so gebildeten Faktoren werden den Multiplikationsgliedern 23 bzw. 24 zugeführt.

In den zweiten Signalzweigen 21 und 22 gelangen die Querachsen-Winkelgeschwindigkeitssignale $\omega_X$ bzw. $\omega_Y$ zunächst zu einem gemeinsamen Integrator 25. Dort werden auf später noch zu beschreibende Weise Winkellagesignale $\Phi$ sowie $\Theta$ gewonnen, welche von den Ausgängen des Integrators 25 zu Multiplikationsgliedern 26 bzw. 27 gelangen In den Integrator 25 wird noch das Drehachsen-Winkelge-schwindigkeitssignal $\omega_Z$ eingegeben. Dieses Signal gelangt außerdem über eine Verzweigung 35 zu zwei Eingängen eines weiteren Multiplikationsgliedes 34, an dessen Ausgang ein dem Quadrat des Drehachsen-Geschwindigkeitssignales entsprechendes Signal $\omega_Z^2$ abnehmbar ist. Letzteres gelangt zu zwei Verstärkungsgliedern 32 und 33, wo Proportionalitätsfaktoren $a_X$ bzw. $a_Y$ aufgeschaltet werden. Die so gebildeten Signale werden schließlich den beiden Multiplikationsgliedern 20 und 27 zugeführt. Deren Ausgangssignale gelangen an die einen Eingange von zwei Summationsgliedern 28 und 29, deren andere beide Eingänge mit den Ausgängen der Multiplikationsglieder 23 und 24 verbunden sind.

Durch die Verzweigung 17, die Multiplikationsglieder 23 und 26, das Summationsglied 28, anteilig den integrator 25 sowie die verbindenden Leitungen ist somit ein erstes Reglernetzwerk gegeben, welches sozusagen der X-Achse zugeordnet ist. Ein zweites Reglernetzwerk wird durch die Verzweigungsstelle 18, die Multiplikationsglieder 24 und 27, das Summationsglied 29, anteilig den Integrator 25 sowie die verbindenden Leitungen gebildet und ist sozusagen der Y-Achse zugeordnet.

Die in den Summationsgliedern 28 und 29 gebildeten Summensignale werden zwei Modulatoren 36 bzw. 37 zugeführt welche mit Totzonen ausgestattet sind und weiterhin Hysteresecharakter aufweisen. Sie dienen dazu, diskrete Stellsignale variabler Breite und Folgefrequenz sowie konstanter Höhe abzugeben, mit denen Stellglieder angesteuert werden, welche durch den Block 38 symbolisiert sind und Stellmomente $T_{cX}$ sowie $T_{cY}$ um die X- bzw. Y-Achsen erzeugen Diese wirken wiederum auf die Satellitendynamik 15 ein.

Die positiven und negativen Schwellen der den Modulatoren 36 und 37 zugeordneten Totzonen können kontiniuierlich variiert werden und zwar proportional zum Quadrat $\omega_Z^2$ des Drehachsen-Winkelgeschwindig-

keitssignales $\omega_Z$. Hierzu wird das Ausgangssignal des Multiplikationsgliedes 34 über eine Verzweigungsstelle 39 zwei Verstärkungsgliedern 40 und 41 zugeführt, in welchen Proportionalitätskonstanten $c_X$ sowie $c_Y$ aufgeschaltet werden. Die so zu $\omega_Z^2$ proportionalen Signale werden den Modulatoren 36 und 37 bzw. den diesen zugeordneten Totzonen zur Variierung ihrer Schwellen zugeführt. Bei Verwendung von Modulatoren mit festen Ansprechschwellen können den Modulatoren alternativ auch zusätzliche Totzoneglieder vorgeschaltet werden, deren Ansprechschwellen dann nach den erfindungsgemäßen Vorschriften variierbar sind.

Die bei den Multiplikationen in den Multiplikationsgliedern 23 und 24 zu verwendenden Proportionalitätsfaktoren $b_X$ und $b_Y$ können beispielsweise auf der Basis folgender Formeln bestimmt werden:

$$b_X = \frac{\eta \cdot d}{\sqrt{1-d^2}} \cdot \frac{I_X}{T_{CX}}$$

$$b_Y = \frac{\eta \cdot d}{\sqrt{1-d^2}} \cdot \frac{I_Y}{T_{CY}}$$

$$\eta = \sqrt{\frac{|I_X - I_Z| \cdot |I_Y - I_Z|}{I_X I_Y}}$$

wobei $I_X$ sowie $I_Y$ die beiden Querachsen Tragheitsmomente, $I_Z$ das Drehachsen-Trägheitsmoment, $T_{CX}$ das Stellmoment um die X-Achse und $T_{CY}$ dasjenige um die Y-Achse darstellen Der Parameter d ist ein im Bereich $1 \geq d \geq 0,2$ zu wählender Dampfungsfaktor, vorzugsweise ist $d = 0,7$.

Die Proportionalitätsfaktoren $a_X$ und $a_Y$, sowie $c_X$ und $c_Y$ konnen mit Hilfe der folgenden Formeln bestimmt werden:

$$a_X = b_X \frac{\beta_{N\,max}}{\Phi_{max}},$$

$$c_X = b_X \beta_{Nmax} T_{CX}$$

$$a_Y = b_Y \frac{\beta_{N\,max}}{\Theta_{max}},$$

$$c_Y = b_Y \beta_{Nmax} T_{cY}$$

wobei $\beta_{N\,max}$ die höchstzulässige Nutationsamplitude sowie $\Phi_{max}$, $\Theta_{max}$ die Maximalamplituden der Winkelbewegung um die Fahrzeug-Querachsen (X-, Y-Achse) bedeuten. Erfahrungsgemäß sind numerische Werte in folgenden Bereichen sinnvoll:

$$0,1 \quad \leq \quad \left( \frac{\beta_{N\,max}}{\Phi_{max}}; \quad \frac{\beta_{N\,max}}{\Theta_{max}} \right) \leq 1$$

$$0,25° \leq (\Phi_{max}; \Theta_{max}) \leq 1°$$

In dem Integrator 25 werden aus den eingangsseitig zugeführten Querachsen-Winkelgeschwindigkeitssignalen $\omega_X$ und $\omega_Y$ Winkellagesignale $\Phi$ und $\Theta$ gebildet, und zwar durch Integration des folgenden Gleichungssy-

EP 0 601 032 B1

stem:

$$\dot{\Phi} = \omega_X + \Theta\omega_Z$$
$$\dot{\Theta} = \omega_Y - \Phi\omega_Z$$

Diese Gleichungen ergeben sich aus den bekannten kinematischen Euler-Gleichungen für drei Achsen, wenn vorausgesetzt wird, daß die Drehungen um die Euler-Winkel $\Psi$, $\Theta$ und $\Phi$ in dieser Reihenfolge zuerst um die Z-Achse, dann um die Y-Achse und schließlich um die X-Achse durchgeführt werden. Weiterhin ist vorausgesetzt, daß die Euler-Winkel $\Phi$ und $\Theta$ um die Querachsen klein sind, die entsprechenden Cosinus-Werte damit zu 1 werden und die entsprechenden Sinus-Werte dem Winkel gleichgesetzt werden können. Das o.g. Gleichungssystem stellt eine zweckmäßige Vereinfachung dar, bei der die Integration lediglich noch für zwei Achsen durchzuführen ist.

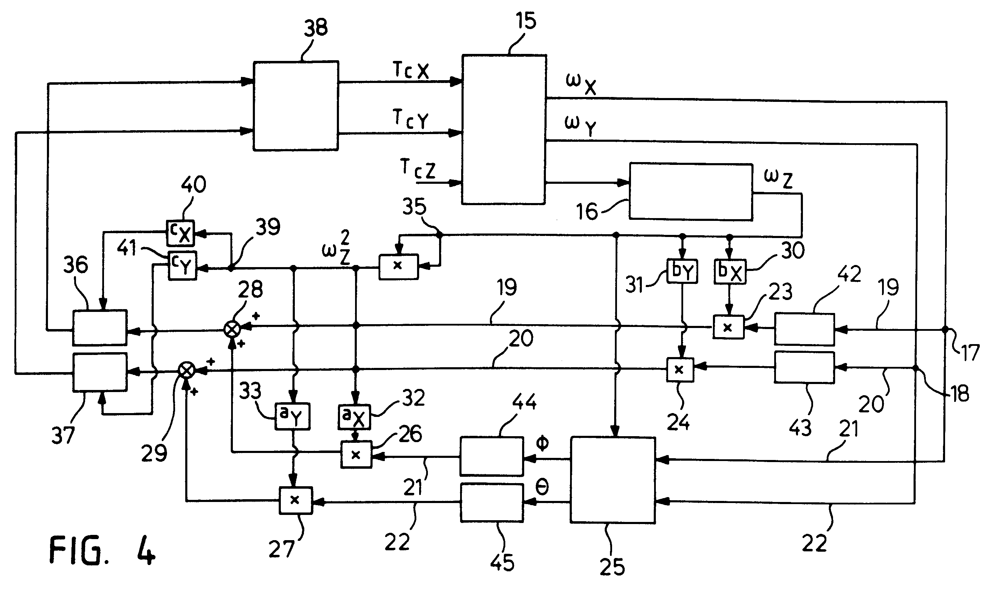

In Fig. 4 ist das Blockschaltbild einer modifizierten Lageregelungsvorrichtung gemäß der Erfindung dargestellt welches dem Blockschaltbild der Fig. 3 in den wesentlichen Zugen gleicht Es sind lediglich in den ersten und zweiten Signalzweigen 19 und 20 bzw. 21 und 22 vor den jeweiligen Multiplikationsgliedern 23 und 24 bzw. 26 und 27 Filter 42 und 43 sowie 44 und 45 eingefügt, deren Übertragungsfunktion im Zähler mindestens ersten, vorzugsweise jedoch zweiten Grades sein soll. Es versteht sich dabei von selbst, daß der Nennergrad mindestens so hoch ist wie der Zählergrad. Es kommen demnach z.B. Übertragungsfunktionen der folgenden Form in Frage:

$$\frac{Ts}{1 + Ts} \quad , \quad \frac{T^2 s^2}{(1 + Ts)^2}$$

Zählergrade höherer als erster Ordnung sind insbesondere dann angebracht, wenn die Zunahme der Drehrate $\dot{\omega}_Z = T_{CZ}/I_Z$ infolge hohen Aufdrallmomentes ($T_{CZ}$) bzw. relativ niedrigen Tragheitsmomentes ($I_Z$) schnell erfolgt, weil dann am Ausgang der Filter 42 bis 45 immer noch nicht vernachlässigbare, konstante Signalanteile verbleiben.

**Patentansprüche**

1. Vorrichtung zur Lageregelung eines um eine körperfeste Achse (Drehachse) in Rotation zu versetzenden Raumfahrzeuges, mit Stellgliedern (38) zur Erzeugung von Drehmomenten um die Drehachse (Z) sowie um zwei zu dieser und zueinander orthogonale Querachsen (X, Y), mit Sensoren zur Bildung von Winkelgeschwindigkeitssignalen ($\omega_X$, $\omega_Y$, $\omega_Z$) bezüglich der drei Achsen (X, Y, Z), mit zwei, jeweils den einer der beiden Querachsen (X, Y) zugeordneten Stellgliedern vorgeschalteten und an diese Stellsignale abgebenden, eine variable Totzone aufweisenden Modulatoren (36, 37) und mit zwei, jeweils eines der beiden Querachsen-WinkelgeschwindigkeitssignaX le ($\omega_X$, $\omega_Y$) aufnehmenden und für einen der beiden Modulatoren (36, 37) ein Ansteuersignal liefernden Reglernetzwerken, mit je einem ersten (19, 20) sowie einem zweiten (19, 20), dem ersten parallelgeschalteten, einen Integrator (25) enthaltenden Signalzweig, gekennzeichnet durch
zwei erste, jeweils in einen der beiden ersten Signalzweige (19, 21) eingeschaltete Multiplikationsglieder (23, 24), in denen proportional ($b_X$, $b_Y$) zum Drehachsen-Winkelgeschwindigkeitssignal ($\omega_Z$) dimensionierte Faktoren zur Anwendung kommen,
zwei zweite, jeweils in einen der beiden zweiten Signalzweige (21, 22) hinter den Integrator (25) eingeschaltete Multiplikationsglieder (26, 27), in denen proportional ($a_X$, $a_Y$) zum Quadrat ($\omega_Z^2$) des Drehachsen-Winkelgeschwindigkeitssignales dimensionierte Faktoren zur Anwendung kommen, sowie
Mittel zur Variierung der Schwellen der Totzone des jeweiligen Modulators (36, 37) proportional ($c_X$, $c_Y$) zum Quadrat ($\omega_Z^2$) des Drehachsen-Winkelgeschwindigkeitssignales.

2. Vorrichtung nach Anspruch 1, **dadurch gekennzeichnet,** daß in jeden der ersten und zweiten Signalzweige (19, 20, 21, 22) ein das jeweilige Querachsen-Winkelgeschwindigkeitssignal ($\omega_X$, $\omega_Y$) aufnehmendes Filter (42, 43, 45, 46) eingeschaltet ist, dessen Übertragungsfunktion im Zähler mindestens ersten, vorzugsweise zweiten Grades ist.

3. Vorrichtung nach Anspruch 1 oder 2, **dadurch gekennzeichnet,** daß die in den jeweiligen zweiten Signalzweigen (21, 22) vorhandenen Integratoren zu einem Integrator (25) zusammengefaßt sind, In

6

dem als Ausgangssignale zwei Winkellagesignale $\Phi$ sowie $\Theta$ durch Integration der folgenden Gleichungen gebildet werden:

$$\dot{\Phi} = \omega_X + \Theta\omega_Z$$
$$\dot{\Theta} = \omega_Y - \Phi\omega_Z$$

wobei $\omega_X$ sowie $\omega_Y$ die beiden Querachsen-Winkelgeschwindigkeitssignale, $\omega_Z$ das Drehachsen-Winkelgeschwindigkeitssignal und $\dot{\Phi}$ sowie $\dot{\Theta}$ die zeitlichen Ableitungen der durch die Integration zu ermittelnde Winkellagesignale bedeuten.

4. Verfahren zur Lageregelung eines um eine körperfeste Drehachse in Rotation zu versetzenden Raumfahrzeuges, das mit Stellgliedern (38) zur Erzeugung von Stellmomenten um die Drehachse (Z) sowie um zwei zu dieser sowie zueinander orthogonale Querachsen (X, Y), Sensoren zur Bildung von Winkelgeschwindigkeitssignalen ($\omega_X$, $\omega_Y$, $\omega_Z$) bezüglich der drei Achsen (X, Y, Z) und jeweils mit einer variierbaren Totzone versehenen Modulatoren (36, 37) zur Abgabe von Stellsignalen für die den Querachsen (X, Y) zugeordneten Stellglieder ausgestattet ist, wobei aus jedem der beiden Querachsen-Winkelgeschwindigkeitssignale ($\omega_X$, $\omega_Y$) jeweils in einem ersten Signalzweig (19, 20) ein erster Signalanteil und in eina zweiten, dem ersten parallelgeschalteten, einen Integrator (25) enthaltenden Signalzweig (21, 22) ein zweiter Signalanteil gebildet und die Summe (28, 29) der beiden Signalanteile da jeweiligen Modulator (36, 37) als Ansteuersignal zugeführt wird, **dadurch gekennzeichnet**, daß in den beiden ersten Signalzweigen (19, 20) jeweils eine Multiplikation (23, 24) mit einem zum Drehachsen-Winkelgeschwindigkeitssignal ($\omega_Z$) proportionalen ($b_X$, $b_Y$) Faktor und in den beiden zweiten Signalzweigen (21, 22) jeweils hinter dem Integrator (25) eine Multiplikation (26, 27) mit einem zum Quadrat des Drehachsen-Winkelgeschwindigkeitssignales ($\omega_Z^2$) proportionalen Faktor ($a_X$, $a_Y$) stattfindet und die Schwellen der Totzonen proportional ($c_X$, $c_Y$) zum Quadrat des Drehachsen-Winkelgeschwindigkeitssignales ($\omega_Z^2$) variiert werden.

5. Verfahren nach Anspruch 4, **dadurch gekennzeichnet**, daß im Falle eines geostationären Satelliten das Drehachsen-Winkelgeschwindigkeitssignal ($\omega_Z$) durch Schätzung (16) aus den Messungen von Sonnensensoren gewonnen wird.

6. Verfahren nach Anspruch 4 oder 5, **dadurch gekennzeichnet**, daß die Querachsen-Winkelgeschwindigkeitssignale ($\omega_X$, $\omega_Z$) vor Einspeisung in die jeweiligen ersten und zweiten Signalzweige (19, 20, 21, 22) einer Filterung in eine: Filter (42, 43, 44, 45) unterzogen werden, dessen Übertragungsfunktion in Zähler mindestens ersten, vorzugsweise zweiten Grades ist.

7. Verfahren nach Anspruch 4 oder 5, **dadurch gekennzeichnet**, daß in den jeweiligen ersten und zweiten Signalzweigen (19, 20, 21, 22) vor der Multiplikation (23, 24, 26, 27) eine Filterung in eine: Filter (42, 43, 44, 45) stattfindet, dessen Übertragungsfunktion im Zähler mindestens ersten, vorzugsweise zweiten Grades ist

8. Verfahren nach eins der Ansprüche 4 bis 7, **dadurch gekennzeichnet**, daß die in den Integratoren (25) der beiden zweiten Signalzweige (21, 22) durchzuführenden Integrationen miteinander verknüpft sind über die zu integrierenden Gleichungen

$$\Phi = \omega_X + \Theta\omega_Z$$
$$\Theta = \omega_Y - \Phi\omega_Z$$

9. Verfahren nach einem der Ansprüche 4 bis 8 **dadurch gekennzeichnet**, daß die Proportionalitätskonstanten $b_X$, $b_Y$ in den Faktoren der in den beiden ersten Signalzweigen (19, 20) stattfindenden Multiplikationen (23, 24) die Form haben:

$$b_X = \frac{\eta \cdot d}{\sqrt{1-d^2}} \cdot \frac{I_X}{T_{CX}}$$

$$b_Y = \frac{\eta \cdot d}{\sqrt{1-d^2}} \cdot \frac{I_Y}{T_{CY}}$$

$$\eta = \sqrt{\frac{|I_X - I_Z| \cdot |I_Y - I_Z|}{I_X I_Y}}$$

wobie $I_X$, $I_Y$ die beiden Querachsen-Trägheitsmomente, $I_Z$ das Drehachsen-Trägheitsmoment, $T_{CX}$ das Stellmoment um die X-Achse, $T_{CY}$ das Stellmoment um die Y-Achse und d einen im Bereich $1 \geqq d \geqq 0{,}1$, vorzugsweise bei 0,7, zu wählenden Dämpfungsfaktor bedeuten.

10. Verfahren nach eins der Ansprüche 4 bis 9, **dadurch gekennzeichnet**, daß die Proportionalitätskonstanten $a_X$, $a_Y$ in den Faktoren der in den beiden zweiten Signalzweigen (21, 22) durchzuführenden Multiplikationen (26, 27) die Form haben:

$$a_X = \frac{\eta \cdot d}{\sqrt{1-d^2}} \cdot \frac{I_X}{T_{CX}} \cdot \frac{\beta_{Nmax}}{\Phi_{max}}$$

$$a_Y = \frac{\eta \cdot d}{\sqrt{1-d^2}} \cdot \frac{I_Y}{T_{CY}} \cdot \frac{\beta_{Nmax}}{\Theta_{max}}$$

wobei $\beta_{Nmax}$ die höchstzulässige Nutationsamplitude und $\Phi_{max}$, $\Theta_{max}$ die Maximal-Amplituden der Winkelbewegung um die Querachsen bedeuten.

11. Verfahren nach einem der Ansprüche 4 bis 10, **dadurch gekennzeichnet**, daß die bei der Variierung der Schwellen der Totzonen zur Wirkung kommenden Proportionalitätskonstanten die Form haben:

$$c_X = \frac{\eta \cdot d}{\sqrt{1-d^2}} \cdot I_X \cdot \beta_{Nmax}$$

$$c_Y = \frac{\eta \cdot d}{\sqrt{1-d^2}} \cdot I_Y \cdot \beta_{Nmax}$$

## Claims

1. A device for attitude control of a space vehicle which is to be rotated around a body based axis (axis of rotation), comprising control elements (38) for generating torques around the axis of rotation (Z) as well as around two transverse axes (X, Y) which are orthogonal thereto and to each other, with sensors for forming angular velocity signals ($\omega_X$, $\omega_Y$, $\omega_Z$) relative to the three axes (X, Y, Z), with two modulators (36, 37), which are respectively arranged on the inputside of the control elements which are associated with one of the two transverse axes (X, Y), and which feed control signals to them and which have a variable dead zone, and with two regulating networks, which receive one of the two transverse axis angular velocity signals ($\omega_X$, $\omega_Y$) and deliver a control signal for one of the two modulators (36, 37), with a respective first (19, 20) signal branch as well as a second (19, 20) signal branch which is switched parallel with the first and includes an integrator (25), **characterized by**

two first multiplication elements (23, 24), which are connected to one of the two first signal branches (19, 21), where factors are applied which are dimensioned proportionally ($b_X$, $b_Y$) to the rotary axis angular velocity signal ($\omega_Z$);

two second multiplication elements (26, 27), which are connected to one of the two second signal branches (21, 22) on the outputside of the integrator (25), where factors are applied which are dimensioned proportionally ($a_X$, $a_Y$) to the square ($\omega^2_Z$) of the rotary axis angular velocity signal; as well as

means of varying the thresholds of the dead zone of a respective modulator (36, 37) proportionally ($c_X$, $c_Y$) to the square ($\omega^2_Z$) of the rotary axis velocity signal.

2. A device according to claim 1, **characterized in that** into each of the first and second signal branches (19, 20, 21, 22) is fitted a filter (42, 43, 45, 46), which receives the respective transverse axis angular velocity signal ($\omega_X$, $\omega_Y$) and the transfer function in the counter is at least in the first, preferably in the second degree.

3. A device according to claim 1 or 2, **characterized in that** the integrators in the respective second signal branches (21, 22) are combined into one integrator (25), wherein two angular attitude signals $\Phi$ and $\Theta$ as output signals are formed by integration of the following equations:

$$\dot{\Phi} = \omega_X + \Theta\omega_Z$$
$$\dot{\Theta} = \omega_Y - \Phi\omega_Z$$

where $\omega_X$ as well as $\omega_Y$ are the two transverse axes angular velocity signals, $\omega_Z$ is the rotary axis angular velocity signal, and $\dot{\Phi}$ and $\dot{\Theta}$ are the temporal derivatives of the angular attitude signals to be determined by the integration.

4. A process for attitude control of a space vehicle which is to be rotated around a body based rotary axis, comprising control elements (38) for generating torques around the axis of rotation (Z) as well as around two transverse axes (X, Y) which are orthogonal thereto and to each other, with sensors for generating angular velocity signals ($\omega_X$, $\omega_Y$, $\omega_Z$) relative to the three axes (X, Y, Z), with modulators (36, 37), which are provided with a respective variable dead zone, for delivering control signals for the control elements associated with the transverse axes (X, Y), and that from each of the two transverse axis angular velocity signals ($\omega_X$, $\omega_Y$) is formed in a first signal branch (19, 20) a first signal portion and in a second signal branch (21, 22), which is connected in parallel with the first and which includes an integrator (25), a second signal portion, and the sum (28, 29) of both signal portions is fed as a control signal to a respective modulator (36, 37), **characterized in that** in the two first signal branches (19, 20) is carried out a respective multiplication (23, 24) by a factor which is proportional ($b_X$, $b_Y$) with the rotary axis angular velocity signal ($\omega_Z$), and in the two second signal branches (21, 22) on the outputside of the integrator (25) is carried out a multiplication (26, 27) by a factor ($a_X$, $a_Y$) which is proportional with the square of the rotary axis angular velocity signal ($\omega^2_Z$), and the thresholds of the dead zones are varied proportionally ($c_X$, $c_Y$) with the square of the rotary axis angular velocity signal ($\omega^2_Z$).

5. A process according to claim 4, **characterized in that** in the case of a geostatic satellite the rotary axis angular velocity signal ($\omega_Z$) is established by approximation (16) based on measuring data of sun sensors.

6. A process according to claim 4 or 5, **characterized in that** the transverse axis angular velocity signals ($\omega_X$, $\omega_Z$) are, prior to being fed into the respective first and second signal branch (19, 20, 21, 22), filtered in a filter (42, 43, 44, 45), its transfer function in the counter being at least of the first, preferably of a second degree.

7. A process according to claim 4 or 5, **characterized in that** prior to multiplication (23, 24, 26, 27), filtering is carried out in the respective first and second signal branches (19, 20, 21, 22) in a filter (42, 43, 44, 45), the transfer function in the counter being at least of the first, preferably of a second degree.

**8.** A process according to one of claims 4 to 7, **characterized in that** the integrations to be carried out in the integrators (25) of the two second signal branches (21, 22) are interlinked via the equations to be integrated:

$$\Phi = \omega_X + \Theta\omega_Z$$
$$\Theta = \omega_Y - \Phi\omega_Z$$

**9.** A process according to one of claims 4 to 8, **characterized in that** the proportionality constants $b_X$, by in the factors of the multiplications (23, 24) carried out in the two first signal branches (19, 20) have the form of:

$$b_X = \frac{\eta \times d}{\sqrt{1 - d^2}} \times \frac{I_X}{T_{CX}}$$

$$b_Y = \frac{\eta \times d}{\sqrt{1 - d^2}} \times \frac{I_Y}{T_{CY}}$$

$$\eta = \sqrt{\frac{|I_X - I_Z| \times |I_Y - I_Z|}{I_X I_Y}}$$

where $I_X$, $I_Y$ are the two transverse axis inertia moments, $I_Z$ is the rotary axis inertia moment, $T_{CX}$ is the control moment around the X-axis, $T_{CY}$ is the control moment around the Y-axis, and d is a damping factor to be selected in the region of $1 \geq d \geq 0.1$, preferably 0.7.

**10.** A process according to one of claims 4 to 9, **characterized in that** the proportionality constants $a_X$, $a_Y$ in the factors of multiplications (26, 27) to be carried out in the two second signal branches (21, 22) have the form of:

$$a_X = \frac{n \times d}{\sqrt{1 - d^2}} \times \frac{I_X}{T_{CX}} \times \frac{\beta_{Nmax}}{\Phi_{max}}$$

$$a_Y = \frac{n \times d}{\sqrt{1 - d^2}} \times \frac{I_Y}{T_{CY}} \times \frac{\beta_{Nmax}}{\Theta_{max}}$$

where $\beta_{Nmax}$ signifies the highest admissible nutation amplitude, and $\Phi_{max}$, $\Theta_{max}$ signify the maximum amplitudes of angular movement around the transverse axes.

**11.** A process according to one of claims 4 to 10, **characterized in that** the proportionality constants operative during threshold variation of the dead zones have the form of:

$$c_X = \frac{\eta \times d}{\sqrt{1 - d^2}} \times I_X \times \beta_{Nmax}$$

$$c_Y = \frac{\eta \times d}{\sqrt{1 - d^2}} \times I_Y \times \beta_{Nmax}$$

**Revendications**

1. Dispositif de régulation de l'attitude d'un véhicule spatial devant être mis en rotation autour d'un axe qui lui est lié (axe de rotation), comportant des actionneurs (38) destinés à produire des moments angulaires autour de l'axe de rotation (Z) ainsi qu'autour de deux axes transversaux (X, Y) orthogonaux à celui-ci et orthogonaux entre eux, des détecteurs pour générer des signaux de vitesse angulaire ($\omega_X$, $\omega_Y$, $\omega_Z$) par rapport aux trois axes (X, Y, Z) deux modulateurs (36, 37) qui présentent une zone neutre variable, sont placés chacun devant les actionneurs associés à l'un des deux axes transversaux (X, Y) et délivrent des signaux de réglage à ceux-ci, et deux réseaux de réglage qui reçoivent chaque fois l'un des deux signaux ($\omega_X$, $\omega_Y$) de vitesse angulaire pour les axes transversaux, délivrent un signal de commande pour l'un des deux modulateurs (36, 37) et comprennent chacun une première branche de signal (19, 20) et une deuxième branche de signal (21, 22) avec un intégrateur (25), en parallèle avec la première, caractérisé par
deux premiers circuits multiplicateurs (23, 24) qui sont insérés chacun dans l'une des deux premières branches de signal (19, 21) et appliquent des facteurs ($b_X$, $b_Y$) proportionnels au signal de vitesse angulaire ($\omega_Z$) des axes de rotation,
deux deuxièmes circuits multiplicateurs (26, 27) qui sont insérés chacun dans l'une des deux deuxièmes branches de signal (21, 22), derrière l'intégrateur (25) et appliquent des facteurs ($a_X$, $a_Y$) proportionnels au carré ($\omega^2_Z$) du signal de vitesse angulaire des axes de rotation et
des moyens pour faire varier le seuil de la zone neutree du modulateur (36, 37) concerné proportionnellement ($c_X$, $c_Y$) au carré ($\omega^2_Z$) du signal de vitesse angulaire des axes de rotation.

2. Dispositif selon la revendication 1, caractérisé par le fait qu'un filtre (42, 43, 45, 46) qui reçoit le signal de vitesse angulaire ($\omega_X$, $\omega_Y$) concerné des axes de rotation est placé dans chacune des deux premières et deuxièmes branches de signal (19, 20, 21, 22), lequel filtre a une fonction d'affaiblissement au moins du premier degré dans le compteur, de préférence du second degré.

3. Dispositif selon la revendication 1 ou 2, caractérisé par le fait que les intégrateurs prévus dans les deuxièmes branches de signal (21, 22) sont regroupés en un intégrateur (25) dans lesquels deux signaux de position angulaire $\Phi$ et $\Theta$ sont formés comme signaux de sortie par intégration des équations suivantes:

$$\Phi = \omega_X + \Theta\omega_Z$$
$$\Theta = \omega_Y - \Phi\omega_Z$$

avec $\omega_X$ et $\omega_Y$ les deux signaux de vitesse angulaire pour les axes transversaux, $\omega_Z$ le signal de vitesse angulaire pour l'axe de rotation et $\Phi$ et $\Theta$ les dérivées par rapport au temps des signaux de position angulaire à déterminer par intégration.

4. Procedé de régulation de l'attitude d'un véhicule spatial devant être nus en rotation autour d'un axe qui lui est lié (axe de rotation), comportant des actionneurs (38) destinés à produire des moments angulaires autour de l'axe de rotation (Z) ainsi qu'autour de deux ces transversaux (X, Y) orthogonaux à celui-ci et orthogonaux entre eux, des détecteurs pour générer des signaux de vitesse angulaire ($\omega_X$, $\omega_Y$, $\omega_Z$) par rapport aux trois axes (X, Y, Z), deux modulateurs (36, 37) qui présentent une zone neutre variable, aux fins de délivrer des signaux de réglage aux actionneurs associés à l'un des deux axes transversaux (X, Y), chacun des deux signaux ($\omega_X$, $\omega_Y$) de vitesse angulaire pour les ces transversaux formant dans une première branche de signal (19, 20) une première partie de signal et, dans une deuxième branche de signal (21, 22) avec un intégrateur (25) en parallèle avec la première une deuxième partie de signal et la somme (28, 29) des deux parties de signal étant transmise en tant que signal de commande au modulateur (36, 37) concerné, caractérisé par le fait que, dans les deux premières branches de signal (19, 20) on opère chaque fois une multiplication (23, 24) par un facteur ($b_X$, $b_Y$) proportionnel au signal de vitesse angulaire ($\omega_Z$) pour l'axe de rotation, dans les deux deuxièmes branches de signal (21, 22), on procède, derrière l'intégrateur (25), à une multiplication (26, 27) par un facteur ($a_X$, $a_Y$) proportionnel au carré ($\omega^2_Z$) du signal de vitesse angulaire pour l'axe de rotation et on fait varier le seuil des zones neutres proportionnellement ($c_X$, $c_Y$) au carré ($\omega^2_Z$) du signal de vitesse angulaire pour l'axe de rotation.

**5.** Procédé selon la revendication 4, caractérisé par le fait que dans le cas d'un satellite géostationnaire, on détermine le signal de vitesse angulaire pour l'axe de rotation ($\omega_Z$) par estimation (16) à partir des mesures des détecteurs de repérage de la position du soleil.

**6.** Procédé selon la revendication 4 ou la revendication 5, caractérisé par le fait qu'avant de les transmettre aux premières et deuxièmes branches de signal (19, 20, 21, 22), on soumet les signaux de vitesse des axes transversaux ($\omega_X$, $\omega_Z$) à un filtrage dans un filtre (42, 43, 44, 45) dont la fonction d'affaiblissement dans le compteur est an moins du premier degré, de préférence du deuxième degré.

**7.** Procédé selon la revendication 4 ou la revendication 5, caractérisé par le fait que dans les premières et deuxièmes branches de signal (19, 20, 21, 22) ou procède avant la multiplication (23, 24, 26, 27) à un filtrage dans un filtre (42, 43, 44, 45) dont la fonction d'affaiblissement dans le compteur est au moins du premier degré, de préférence du deuxième degré.

**8.** Procédé selon l'une des revendications 4 à 7, caractérisé par le fait que les intégrations à réaliser dans les intégrateurs des deux deuxièmes branches de signal (21, 22) sont combinées entre elles par les équations d'intégration

$$\Phi = \omega_X + \Theta\omega_Z$$
$$\Theta = \omega_Y + \Phi\omega_Y$$

**9.** Procédé selon l'une des revendications 4 à 8, caractérisé par le fait que les constantes proportionnelles $b_X$, $b_Y$ dans les facteurs des multiplications (23, 24) opérées dans les deux premières branches de signal (19, 20) ont la forme

$$b_X = \frac{\eta * d}{\sqrt{1 - d^2}} * \frac{I_X}{T_{CX}}$$

$$b_Y = \frac{\eta * d}{\sqrt{1 - d^2}} * \frac{I_Y}{T_{CY}}$$

$$\eta = \sqrt{\frac{|I_X - I_Z| * |I_Y - I_Z|}{I_X I_Y}}$$

avec $I_X$, $I_Y$ les deux moments d'inertie des axes transversaux, $I_Z$ le moment d'inertie de l'axe de rotation, $T_{CX}$ le moment de réglage autour de l'axe X, $T_{CY}$ le moment de réglage autour de l'axe Y, et d un facteur d'amortissement à choisir dans la plage $1 \geqq d \geqq 0,1$, de préférence égal à 0,7.

**10.** Procédé selon l'une des revendications 4 d 9, caractérisé par le fait que les constantes proportionnelles $a_X$, $a_Y$ dans les facteurs des multiplications (26, 27) à opérer dans les deux deuxièmes branches de signal (21, 22) ont la forme

$$a_X = \frac{\eta * d}{\sqrt{1 - d^2}} * \frac{I_X}{T_{CX}} * \frac{\beta_{Nmax}}{\Phi_{max}}$$

$$a_Y = \frac{\eta * d}{\sqrt{1 - d^2}} * \frac{I_Y}{T_{CY}} * \frac{\beta_{Nmax}}{\Theta_{max}}$$

avec $\beta_{max}$ l'amplitude de nutation maximale admissible et $\Phi_{max}$, $\Theta_{max}$ les amplitudes maximales de déplacement angulaire autour des axes transversaux.

**11.** Procédé selon l'une des revendications 4 à 10, caractérisé par le fait que les constantes proportionnelles entrant en action lorsqu'on fait varier le seuil des zones neutres ont la forme

$$a_X = \frac{\eta * d}{\sqrt{1 - d^2}} * I_X * \beta_{Nmax}$$

$$a_Y = \frac{\eta * d}{\sqrt{1 - d^2}} * I_Y * \beta_{Nmax}$$

FIG. 1

FIG. 2

FIG. 3

EP 0 601 032 B1

FIG. 4

EP 0 601 032 B1